# EUROPEAN PATENT SPECIFICATION

(11) **EP 0 449 033 B1**
(45) Date of publication and mention of the grant of the patent: **28.06.1995**
(21) Application number: 91103802.4
(22) Date of filing: 13.03.1991
(51) Int. Cl.: B29C 70/34, B29C 70/48

(54) **Process for the manufacture of sandwich structures**
Verfahren zum Herstellen von Verbundmaterialien
Procédé pour la préparation de matériaux composites

(30) Priority: 26.03.1990 IT 1244190
(43) Date of publication of application: 02.10.1991
(73) Proprietor: METALLEIDO S.R.L., I-16141 Genova (IT)
(72) Inventor: Fantino, Marco, I-16141 Genova (IT)
(74) Representative: Prato, Roberto

(56) References cited:
- EP-A- 0 286 058
- GB-A- 2 211 780
- US-A- 2 607 104
- US-A- 3 045 319
- US-A- 3 286 004
- US-A- 3 859 401
- US-A- 3 940 468
- PATENT ABSTRACTS OF JAPAN vol. 9, no. 164 (M-395)10 July 1985

## Description

The present invention has for its object a process for the manufacture of sandwich structures.

It is known that in the manufacture of structural elements formed by fabrics made from glass fibres, aramidic fibres, carbon fibres and similar, impregnated with thermoplastic or thermosetting resins, use has been made for several years of panels of the type known as sandwich, that is to say panels formed by two external surface layers of a fabric made of fibers of resistant material applied to a central filling core.

For instance EP-A-286.058 shows a sandwich structure comprising an inner core (formed by polyurethane resin foam), two layers (formed of vegetable, mineral or synthetic fibres) disposed on opposite sides of the core and intermediate spacer elements inserted between the layers and embedded in the core.

The central filling core is often constituted by a light honeycomb structure with the axis of the cells arranged perpendicularly to the plane of lying of the panel, or by a filling made from foamed or expanded resin.

Panels with a filling of foam only do not exhibit a satisfactory ratio between weight and mechanical characteristics, as a result of which their use is mainly limited to the field of heat and sound insulation.

Panels with a central honeycomb core have three kinds of disadvantages.

Firstly, the honeycomb structure lends itself only within precise limits to matching a cylindrical surface while it is not capable of being deformed in order to assume the shape of surfaces having double curvature.

In order to obtain double curvature panels it is necessary to segment the honeycomb structure into a finite series of elements capable of matching the surface having double curvature or to hot-shape it, only in the event that the honeycomb structure is made from thermoplastic resins.

Secondly, when filling of the honeycomb structure is required, for example with expanded resin, said filling has to be carried out before the insertion of the honeycomb structure between the two external peripheral layers.

Thirdly, the very reduced contact surface area between the external edges of the honeycomb structure and the surface layers involves a considerable reduction in the shearing strength parallel to the layers with a consequent increase in the risk of delamination of the same.

More recently, for the manufacture of composite panels, instead of honeycomb structures, it has been attempet to use so-called "three-dimensional" webs or fabrics, formed by two parallel spaced layers of fabric, connected together by means of filaments arranged perpendicularly to the above mentioned layers.

These three-dimensional webs have been filled with expanded resins intended to rigidify them and to render their strength comparable to that of the honeycomb structures.

The use of such webs is, however, difficult and has a certain number of disadvantages.

Firstly, it is not easy to fill such three-dimensional webs with expanded resins because the two layers forming their external surface do not remain naturally equispaced, as would be desiderable, but have to be maintained in this position artificially.

Secondly, said three-dimensional webs cannot be bent according to cylindrical surfaces or, even less, according to surfaces having double curvature, while keeping the external layers equispaced.

It is therefore one object of the present invention that of overcoming such disadvantages of the known prior art, by forming sandwich-type panels starting from three-dimensional webs, by means a process which permits to maintain the external layers of said panels perfectly parallel and equispaced.

Further object of the present invention, is a process for the manufacture of sandwich panels of the kind previously mentioned which, thanks to the use of three-dimensional webs, the external layers of which are constituted by tricot or knitted fabric, may assume any desired shape having single or double curvature, while keeping the external layers equispaced.

The claimed process is summarized and systematically presented in the claims. Further characteristics and the advantages of the process according to the invention will be better evident from the following description of some embodiments of same, made with reference to the accompanying drawings, in which:
Figure 1 is an exploded view of a composite element according to the invention made by two layers of covering fabric and a central core of a three-dimensional web the outer layers of which are formed by weft and warp fabric.
Figure 2 is a perspective view of a three-dimensional web the outer layers of which are made by tricot or knitted fabric.
Figure 3 shows diagrammatically a plant for the manufacture of the sandwich structures according to the invention, and
Figure 4 shows, in enlarged scale, the mold for the final hardening of the panels in the plant of Figure 3.

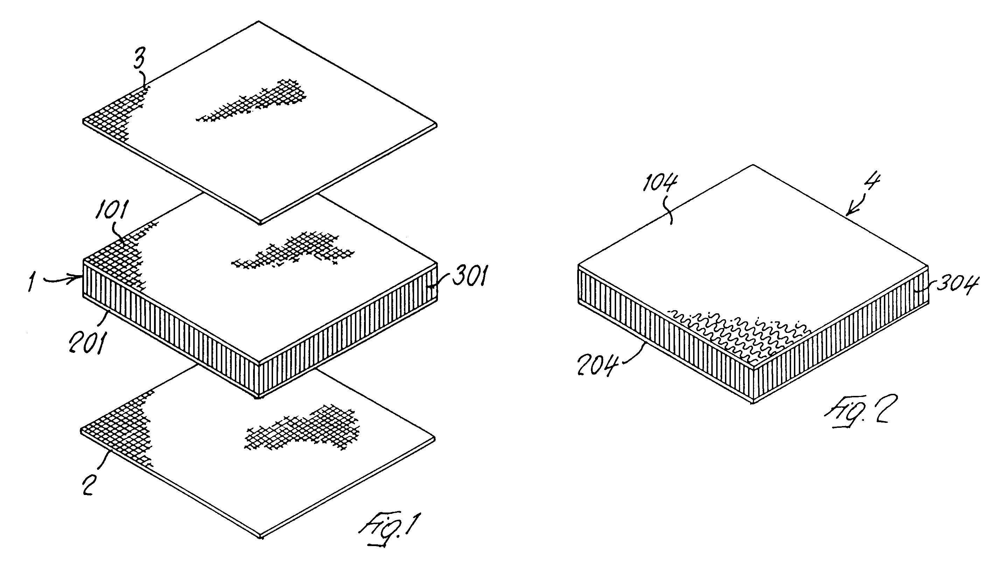

With reference to the drawings, and with particular reference to Figure 1, numeral 1 denotes a sheet of three-dimensional web, formed by two external parallel layers 101, 201 of fabric provided with crossing warp and weft filaments. The said layers 101 and 201 are connected together by a number of filaments 301 extending perpendicularly to the laying plane of the fabric layers 101, 201. Numerals 2 and 3 denotes two sheets of reinforcing fabric, which are intended to be connected by adhesion to the layers 101, 102 in order to form a very resistant structure, as will be described later.

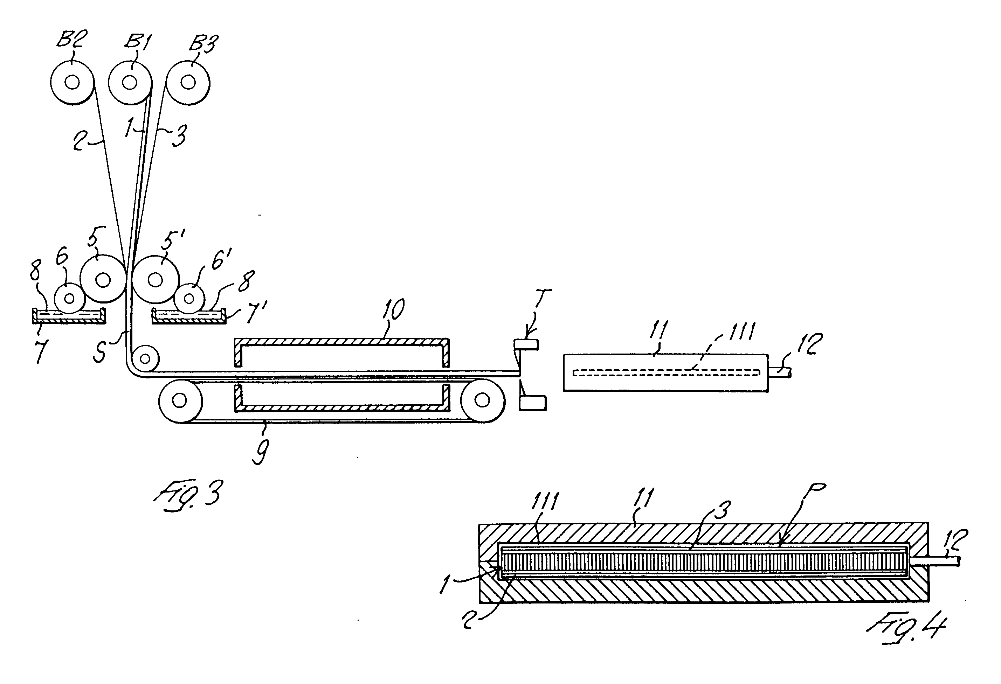

In Figure 2 a three-dimensional web sheet 4 is shown, which is similar to the sheet 1 of Figure 1. However, the layers 104 and 204 of the sheet 4 are made from knitted or tricot fabric, for the purposes which will be better described later. The said layers 104 and 204 are connected together by means of a plurality of filaments 304 in the same manner and for the same purposes as the filaments 301 of the sheet 1.

In Figure 3 a plant for the manufacture of the composite panels according to the invention is shown.

With reference to Figure 3, B1 is a bobbin from which a sheet 1 of three-dimensional web is unwound, and B2 and B3 are two bobbins from which the reinforcing fabric sheets 2 and 3 are unwound. Both the sheet 1 and the sheets 2 and 3 can be made from any suitable material, and for instance from fiber glass fabric, carbon fiber fabric, or even a fabric made from vegetal textile fibers.

The sheets 1, 2 and 3 are fed to a resin applying station, comprising the two opposed applying cylinders 5, 5' and the transfer rollers 6,6' dipped into the tanks 7, 7' containing the fluid resin 8. The resin-impregnated sandwich S thus formed is transferred, for instance by means of the conveyor belt 9, through the furnace 10, where the resin 8 is pre-hardened or pre-cured.

The pre-hardened, but still plastic sandwich S which comes out from the furnace 10, is cut into single panels P at the cutting station T, and the panels P are fed to the molds 11, which are best shown in Figure 4.

Each mold 11 is provided with heating means (not shown) and is provided with a mold cavity 111 which, in the example shown, is shaped in the form of a rectangular prismatic cavity, but which could be shaped at will with single or double curvatures, according to the requests, as it will be explained later.

The panel P is introduced into the mold cavity 111, so as to fill it completely. Numeral 12 denotes a feed duct which opens at the level of the filaments 301 of the fabric 1. Through the duct 12 a suitable expansion fluid is injected into the space confined between the two sheets 101 and 201. The said fluid may be, according to the requirements, an expandible resin, or a compressed fluid (compressed gas or air), or also a composition which is apt to develop a pressurizzed gas when the mold is heated to the curing temperature of the resin soaking the panel S. Thanks to the fact that the impregnating resin was already pre-cured, the fabric layers 101, 201, 2 and 3 are impervious to the gases, so that the gas pressure which is developed in the internal space of the three-dimensional web compresses the fabric layers 2,3 and 101, 201 toward opposite directions against the inner walls of the mold, so that once completed the polimerisation of the resin, the panel P which is extracted from the mold 11 has the exact outline of said mold, and the surfaces 101, 201 are equispaced through all the surface of the panel P.

By using a three-dimensional web 4 of the knitted fabric type, instead of the web 1, it is possible to confer to the final panel any single or double curvature, by simply using a suitably shaped mold 11.

As impregnating resins it is possible to use any thermoplastic or thermosetting resin. Phenolic resins are particularly suitable.

Although the composite structures according to the invention have been described as formed by a layer of a three-dimensional web 1 provided with two resistant outer layers 2 and 3, it will be evident that the composite panel may be formed with only one outer resistant layer or without any outer resistant layer, by transferring the function of resistant structure to the outer layers of the three-dimensional web, suitably impregnated with resin, or to an internal filling of expanded resin.

Further, by varying the density of the filaments in the direction perpendicular to the layers and by disposing them according to a pre-fixed pattern, it is possible to form within the three-dimensional web hollow passages for cables, ducts, and the like.

By introducing into the thus formed hollow passages solid or tubular bars of metallic or plastic material, before the injection of the expanded resin, it is possible to form in the composite panel cavities or passages, after extraction (once completed the polimerisation) of the previously introduced bars, if solid, whilst whenever tubular bars are used, same can be also left inside the panel.

## Claims

1. A process for the manufacture of sandwich structures comprising as base element a so called three-dimensional web (1;4) formed by two substantially parallel sheets (101, 201; 104, 204) of fabric mutually connected by means of filaments (301; 304) disposed perpendicularly to the laying planes of said fabric sheets (101, 201; 104, 204) comprising the steps of:
(a) impregnating said web (1;4) with a thermoplastic or thermosetting resin;
(b) partial hardening or curing of said resin;
(c) introduction of the web with the partially hardened resin into a mold (11);
(d) injection in the mold (11) between the two sheets (101,201;104,204) of the three-dimensional web of an expansion fluid;
(e) completing the hardening or curing of the said resin.

2. The process according to claim 1, characterized by the fact that the two sheets (104,204) of fabric of the three-dimensional web (4) are made from knitted or tricot fabric.

3. The process according to claims 1 and 2, characterized by the fact that the said expansion fluid is formed by an expandible resin.

4. The process according to claims 1 and 2, characterized by the fact that the said expansion fluid is a compressed gas.

5. The process according to claims 1 and 2, characterized by the fact that in the three-dimensional web (1; 4) a compound is introduced which is apt to free or generate an expansion fluid at the hardening or curing temperatures of the resin.

6. The process according to claims 1 to 6, characterized by the fact that one or two outer layers (2;3) of resin impregnated fabric are associated to said base element (1;4) on one or both of its outer sides.

7. The process according to any one of the preceding claims, characterized by the fact that at the interior of the base element (1;4) solid or tubular cores are inserted before its introduction into the mold (11).

8. A sandwich structure obtained with the process according to claims 1 to 7, comprising:
a sheet of three-dimensional web (1;4) formed by two substantially parallel sheets (101,201;104,204) of fabric mutually connected by means of filaments (301,304) disposed perpendicularly to the laying planes of said fabric sheets (101,201;104,204);
said three-dimensional web (1;4) being impregnated with a hardened or cured resin; said resin being selected from the thermoplastics or thermosetting resins; and
an expansion fluid injected between said fabric sheets (101,201;104,204) of said three-dimensional web (1;4).

9. A structure according to claim 8, further comprising one or two external sheets (2,3) of reinforcing fabric.

10. A structure according to claims 8 or 9, in which said fabric sheets (1,4,2,3) are made from mineral fibres, as for instance glass fibres, or plastic material fibres, carbon fibres, aramidic fibres, vegetable textile fibres or the like.

## Patentansprüche

1. Verfahren zur Herstellung von Sandwich-Strukturen, die als Basiselement ein sogenanntes dreidimensionales Gewebe (1; 4) aufweisen, das durch zwei im wesentlichen parallele Platten (101, 201; 104, 204) einer Textilie gebildet ist, welche mittels Filamenten (301; 304) miteinander verbunden sind, die senkrecht zu den Lageebenen der genannten Textil-Platten (101, 201; 104, 204) angeordnet sind, wobei man:
(a) das genannte Gewebe (1; 4) mit einem thermoplastischen oder wärmehärtbaren Harz imprägniert,
(b) das genannte Harz partiell härtet oder aushärtet,
(c) das Gewebe mit dem teilgehärteten Harz in eine Form (11) einbringt,
(d) in die Form (11) zwischen die beiden Platten (101, 201; 104, 204) des dreidimensionalen Gewebes ein fließfähiges Expansionsmedium einspritzt und
(e) die Härtung oder Aushärtung des genannten Harzes vervollständigt.

2. Verfahren gemäß Anspruch 1,
dadurch **gekennzeichnet**, daß
die beiden Textil-Platten (104, 204) des dreidimensionalen Gewebes (4) aus Strick- oder Trikot-Textilware hergestellt sind.

3. Verfahren gemäß einem der Ansprüche 1 und 2,
dadurch **gekennzeichnet**, daß
das fließfähige Expansionsmedium durch ein expandierbares Harz gebildet ist.

4. Verfahren gemäß einem der Ansprüche 1 und 2,
dadurch **gekennzeichnet**, daß
das genannte fließfähige Expansionsmedium ein komprimiertes Gas ist.

5. Verfahren gemäß einem der Ansprüche 1 und 2,
dadurch **gekennzeichnet**, daß
in das dreidimensionale Gewebe (1; 4) eine Verbindung eingebracht wird, die dazu befähigt ist, ein fließfähiges Expansionsmedium bei den Härtungs- oder Aushärtungstemperaturen des Harzes freizusetzen oder zu erzeugen.

6. Verfahren gemäß jedem der Ansprüche 1 bis 6,
dadurch **gekennzeichnet**, daß
eine oder zwei äußere Schichten (2; 3) einer mit Harz imprägnierten Textilie mit dem genannten Basiselement (1; 4) auf einer oder beiden seiner Aussenseiten verbunden sind.

7. Verfahren gemäß jedem der vorhergehenden Ansprüche,
dadurch **gekennzeichnet**, daß
in das Innere des Basiselements (1; 4) vollkörperliche oder rohrförmige Kerne vor seiner Einführung in die Form (11) eingebracht sind.

8. Sandwich-Struktur, erhältlich durch das Verfahren gemäß jedem der Ansprüche 1 bis 7, umfassend:
eine Platte eines dreidimensionalen Gewebes (1; 4) , die durch zwei im wesentlichen parallele Platten (101, 201; 104, 204) einer Textilie gebildet ist, welche mittels Filamenten (301, 304) miteinander verbunden sind, die senkrecht zu den Lageebenen der genannten Textil-Platten (101, 201; 104, 204) angeordnet sind,
wobei das genannte dreidimensionale Gewebe (1; 4) mit einem gehärteten oder ausgehärteten Harz imprägniert ist, welches aus thermoplastischen oder wärmehärtbaren Harzen ausgewählt ist,
und wobei ein fließfähiges Expansionmedium zwischen die genannten Textil-Platten (101, 201; 104, 204) des genannten dreidimensionalen Gewebes (1; 4) eingespritzt wird.

9. Struktur gemäß Anspruch 8,
welche ferner eine oder zwei äußere Platten (2, 3) aus einer verstärkenden Textilie aufweist.

10. Struktur gemäß Anspruch 8 oder 9,
worin die genannten Textil-Platten (1, 4; 2, 3) aus Mineralfasern, wie z.B. Glasfasern, oder aus Fasern aus Kunststoffmaterial, aus Kohlenstoffasern, Aramidfasern, pflanzlichen Textilfasern oder dgl. hergestellt sind.

## Revendications

1. Procédé pour la fabrication de structures sandwich comprenant comme élément de base un tissage dit tridimensionnel (1 ; 4) formée par deux nappes de tissu substantiellement parallèles (101, 201; 104, 204) reliées entre elles par des filaments (301; 304) disposés perpendiculairement aux plans de pose desdites nappes (101, 201; 104, 204) de tissu, comprenant les étapes suivantes :
(a) imprégnation dudit tissage (1 ; 4) avec une résine thermoplastique ou thermodurcissable;
(b) durcissement ou cuisson partiels de ladite résine ;
(c) introduction dans un moule (11) du tissage imprégné de la résine partiellement durcie;
(d) injection dans le moule (11), entre les deux nappes (101, 201; 104, 204) de tissage tridimensionnel, d'un fluide à expansion;
(e) achèvement du durcissement ou de la cuisson de ladite résine.

2. Procédé selon la Revendication 1, ***caractérisé par*** le fait que les deux nappes (104, 204) de tissu du tissage tridimensionnel (4) sont réalisées à partir de tissu maillé ou tricoté.

3. Procédé selon les Revendications 1 et 2, ***caractérisé par*** le fait que ledit fluide à expansion est formé par une résine expansible.

4. Procédé selon les Revendications 1 et 2, ***caractérisé par*** le fait que ledit fluide à expansion est un gaz comprimé.

5. Procédé selon les Revendications 1 et 2, ***caractérisé par*** le fait que, dans le tissage tridimensionnel (1 ; 4), on introduit un composé qui est apte à libérer ou générer un fluide à expansion aux températures de durcissement ou de cuisson de la résine.

6. Procédé selon les Revendications 1 à 5, ***caractérisé par*** le fait qu'une ou deux couches extérieures (2 ; 3) de tissu imprégné de résine sont associées audit élément de base (1 ; 4) sur l'une de ses faces extérieures ou sur les deux.

7. Procédé selon l'une quelconque des Revendications précédentes, ***caractérisé par*** le fait que des noyaux tubulaires ou pleins sont insérés à l'intérieur de l'élément de base (1 ; 4) avant son introduction dans le moule (11).

8. Structure sandwich obtenue selon le procédé des Revendications 1 à 7, comprenant :
une nappe de tissage tridimensionnel (1 ; 4) formée par deux nappes de tissu substantiellement parallèles (101, 201; 104, 204) reliées entre elles par des filaments (301 ; 304) disposés perpendiculairement aux plans de pose desdites nappes (101, 201; 104, 204) de tissu;
ledit tissage tridimensionnel (1 ; 4) étant imprégné avec une résine durcie ou cuite ; ladite résine étant choisie parmi les résines thermoplastiques ou thermodurcissables ; et
un fluide d'expansion injecté entre lesdites nappes (101, 201; 104, 204) de tissu dudit tissage tridimensionnel (1 ; 4).

9. Structure selon la Revendication 8, comprenant additionnellement une ou deux nappes externes (2, 3) de tissu de renfort.

10. Structure selon les Revendications 8 ou 9, dans laquelle lesdites nappes (1, 4, 2, 3) de tissu sont faites de fibres minérales, comme par exemple des fibres de verte textile, ou des fibres de matériau plastique, des fibres de carbone, des fibres aramides, des fibres de textile végétal ou autres matériaux similaires.
